# EUROPEAN PATENT APPLICATION

(11) **EP 4 814 337 A1**
(43) Date of publication of application: **30.09.2026**
(21) Application number: 26165487.5
(22) Date of filing: 17.03.2026
(51) Int. Cl.: F16G 15/08, A63B 29/00, F16G 11/14, B63B 21/04

(54) **SWIVEL END DEVICE FOR CONNECTION TO A LOOPED ROPE END**

(30) Priority: 25.03.2025 IT 202500006147
(71) Applicant: Arbpro S.r.l., 20836 Briosco (MB) (IT)
(72) Inventor: MAZZA, Alessandro, 20836 Briosco (MB) (IT)
(74) Representative: Mati, Silvia

(57) **Abstract**

A swivel end device (10) for connection to a looped rope end comprising at least one connecting element (11), which comprises a first eyelet-shaped portion (11a), and a pair of walls (12) not orthogonal to a development axis (A) and constrained to each other according to a facing and spaced apart arrangement so as to define a first (12a) and a second housing compartment (16), side by side along the development axis (A), wherein the at least one connecting element (11) is housed in the first housing compartment (12a) in a rotatable manner around a development axis (A) and with the first eyelet-shaped portion (11a) protruding externally from the first housing compartment (12a), and wherein the second housing compartment (16) houses a shaft (17) around which a looped rope end (20) can be constrained, and wherein it comprises a pair of side walls (21b,23) which extend between the pair of facing walls (12) at the lateral ends of the same (12) and laterally delimit at least the second housing compartment (16) in such a way as to define with the pair of facing walls (12) at least one compartment peripherally closed around the development axis (A).

## Description

### TECHNICAL FIELD

The present invention relates in general to a swivel end device for connecting to a looped rope end, also known as a "lug", of a type that can be used in high-altitude rope activities such as tree climbing, mountaineering and mountain rescue.

### STATE OF THE ART

In the field of high-altitude rope activities, and particularly in tree climbing, mountaineering and mountain rescue, it is common to perform a number of operations, using ropes, both to secure properly harnessed people and to move loads.

In this type of activity, it is usual to connect the end of the ropes to a fixed or mobile anchor, or directly to a person's harness or the attachment point of a load.

To this end, the ropes have a looped end, also known as an "eye splice", i.e. an end part that is typically twisted back on itself and sewn or spliced to form a loop necessary to finalise its connection.

Typically, the looped end is used to pass a coupling tool through it, such as a safety carabiner, to be connected to an anchor, to the harness worn by a person or to a load.

To facilitate the attachment of such tools, it is known to use end devices configured to be connected to the looped end of a rope and which, in general terms, provide at least one eyelet to which the coupling tools can be anchored.

End devices are crucial elements for the correct and safe execution of rope manoeuvres, as they are tasked with preventing the rope to which the coupling tool is connected from twisting. This is, in fact, very dangerous because it can compromise the use of the ropes and coupling tools, or even operate them in the wrong way, making rope manoeuvres difficult or impossible, as well as exposing operators to serious risks to their safety.

For this reason, it is known to use swivel end devices, which usually consist of an element made in the form of an eyelet to facilitate the constraint of a coupling tool and a second element configured to cooperate with a rope, wherein the two elements are constrained together in such a way that they can rotate with respect to each other about a main axis. The second element is generally made in the form of a pin or shaft about which the looped end of the rope can be constrained.

These devices allow the coupling tools to be connected in a rotatable manner, thus leaving ample freedom of movement between the coupled elements. For example, the swivel connection between a pair of ropes allows them to be free to rotate with respect to each other without tension or twisting.

The swivel end devices for connecting to a looped end of rope known today have several disadvantages in terms of ease of installation on the rope and during their use. On the one hand, it is somewhat laborious to connect them to the looped end of the rope, and on the other hand, once they are connected, they are excessively mobile in relation to the end of the rope, making it difficult to manoeuvre them when anchoring to a coupling tool.

Again, in the event that known end devices incorporate a carabiner connector, it is essential that this is fit for purpose in terms of shape, thus limiting the operator's choice. In addition, the excessive mobility of the end device provided with a carabiner does not guarantee perfect alignment with the direction of the load, which is essential to ensure that static stress always occurs on the connector's major axis and away from the opening lever.

There is therefore a need for a swivel end device for connecting to a looped end of rope that can be easily mounted on the rope and is practical and easy to handle in use, as it can be made through quick, simple and inexpensive operations.

### AIMS AND SUMMARY OF THE INVENTION

The problem underlying the present invention is to overcome the drawbacks of the prior art. In particular, within the context of this problem, an aim is to devise a swivel end device for connecting to a looped end of a rope that can be easily and quickly mounted on a looped end of a rope and is stably oriented, as well as being practical and easy to handle in use.

Another aim of the present invention is to provide a swivel end device for connecting to a looped end of rope that is capable of providing a secure and reliable connection, allowing the connected elements to rotate towards each other without jamming or catching.

A further aim of the present invention is to devise a swivel end device for connecting to a looped end of rope that has a simple structure and can be made by easily replicable and inexpensive operations, such as moulding and turning.

Not least of the aims of the present invention is to devise a swivel end device for connecting to a looped end of rope that can be made inexpensively.

According to a first aspect thereof, the invention thus relates to a swivel end device for connecting to a looped end of a rope comprising at least one connecting element, which in turn comprises a first eyelet-shaped portion, and a pair of walls, not orthogonal to a development axis and constrained to each other according to a facing and spaced apart arrangement so as to define a first and a second housing compartment side by side along the development axis.

At least one connecting element is housed in the first housing compartment in a rotatable manner about a development axis and with the first eyelet-shaped portion protruding externally from the first compartment. In addition, the second housing compartment houses a shaft around which a looped rope end can be constrained.

According to the present invention, the swivel end device comprises a pair of side walls which extend between the pair of facing walls at the lateral ends of the same and laterally delimit at least the second housing compartment in such a way as to define, with the pair of facing walls, at least one compartment peripherally closed around the development axis.

The Applicant has identified that by using a pair of side walls laterally delimiting at least the second housing compartment, essentially closing it peripherally around the development axis, a limitation of the freedom of movement of the entire end device around the looped end of the rope is achieved when the rope is constrained around the shaft, thus keeping the device stably oriented. This allows the end of the rope and the swivel end device to be manoeuvred in a stable manner, with the first eyelet-shaped portion protruding from the first compartment remaining substantially aligned with the loop defined by the end of the rope.

In addition, the special design of the compartment in which the connecting element and the shaft are housed makes it possible to manufacture and assemble the swivel end device in an extremely simple and economical manner. In fact, the walls can be obtained simply by cutting a sheet of metal.

Last but not least, the shaft housed removably in the second compartment makes it quick and easy to mount the end device on a looped end of a rope.

Further features of the preferred embodiments of the swivel end device for connection to a looped rope end according to the present invention are the subject matter of the dependent claims.

### BRIEF DESCRIPTION OF THE DRAWINGS

Further characteristics and advantages of the present invention will become clearer from the following detailed description of some preferred embodiments thereof, made with reference to the accompanying drawings.

The different features in the individual configurations can be combined with each other as desired according to the following description, if the advantages resulting specifically from a particular combination are to be availed of.

In such drawings,
- Figure 1 is a perspective view of a first preferred embodiment of a swivel end device for connection to a looped rope end according to the present invention;
- Figures 1a and 1b show, respectively, a sectional view and an exploded view of the device in Figure 1;
- Figures 2 and 2a are, respectively, a perspective view and a sectional view of a swivel end device for connection to a looped rope end according to a second preferred embodiment of the present invention;
- Figures 3 and 3a are, respectively, a perspective view and a sectional view of a swivel end device for connection to a looped rope end according to a third preferred embodiment of the present invention;
- Figures 4 and 4a are, respectively, a perspective view and a sectional view of a swivel end device for connection to a looped rope end according to a fourth preferred embodiment of the present invention; and
- Figures 5 and 5a are, respectively, a perspective view and a sectional view of a swivel end device for connection to a looped rope end according to a fifth preferred embodiment of the present invention.

### DETAILED DESCRIPTION OF THE INVENTION

For the illustration of the drawings, use is made in the following description of identical numerals or symbols to indicate construction elements with the same function. Moreover, for clarity of illustration, certain references may not be repeated in all drawings.

While the invention is susceptible to various modifications and alternative constructions, certain preferred embodiments are shown in the drawings and are described hereinbelow in detail. It must in any case be understood that there is no intention to limit the invention to the specific embodiment illustrated, but, on the contrary, the invention intends covering all the modifications, alternative and equivalent constructions that fall within the scope of the invention as defined in the claims.

The use of "for example", "etc.", "or" indicates non-exclusive alternatives without limitation unless otherwise indicated. The use of "comprises" and "includes" means "comprises or includes, but not limited to", unless otherwise indicated.

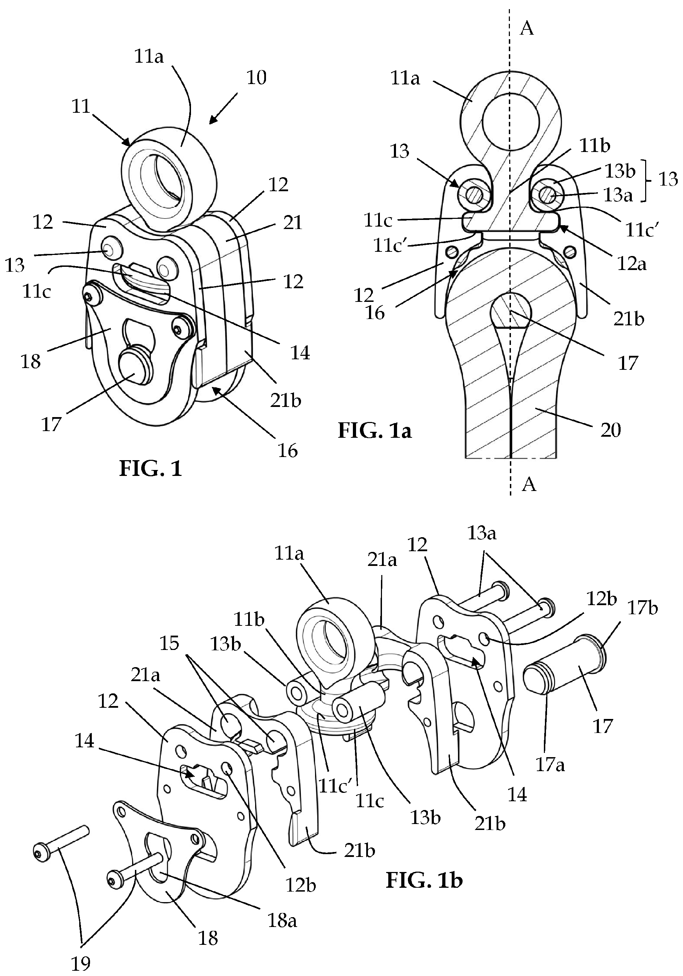

With reference to Figures 1, 1a and 1b, a first preferred embodiment of a swivel end device for connection to a looped rope end according to the present invention is shown, indicated overall by number 10.

This swivel end device 10 comprises a connecting element 11 which in turn comprises a first eyelet-shaped portion 11a, from which a second elongated portion 11b shaped like a stem extends along a development axis A. At a free end of the second portion 11b, the connecting element 11 comprises an enlarged third portion 11c having at least one surface 11c' developing transversely, i.e. not parallel, to the development axis A. The third portion 11c is integral with the second portion 11b.

In the embodiment shown, the third enlarged portion 11c is shaped like a disc. Preferably, the at least one transversely developing surface 11c' has a development substantially orthogonal to the development axis A.

In an alternative embodiment (not shown), the first eyelet-shaped portion 11a defines an opening ring. For example, the first eyelet-shaped portion 11a comprises a pivot constrained to the second stem portion 11b according to an arrangement transverse to the development axis A, wherein the pivot is constrained in a removable manner to a U-shaped element, possibly in a rotatable manner about a pivot extension axis.

The terminal device 10 of Figures 1-1b further comprises a pair of walls 12 not orthogonal to the development axis A of the second elongated stem portion 11b, preferably a pair of walls having two development directions of which one is substantially parallel to the axis A, between which the connecting member 11 is housed rotatably about the development axis A. In particular, between the pair of walls 12 the second elongated stem portion 11b and the third enlarged portion 11c are accommodated, while the first eyelet-shaped portion 11a protrudes externally from the volume delimited by the pair of walls 12.

In the embodiment shown, the walls of the pair of walls 12 are constrained to each other by a pair of elongated constraining elements 13 configured to keep the walls 12 spaced apart and parallel to each other. Between the walls of the pair of walls 12, a first compartment 12a is thus defined in which the connecting element 11 is rotatably housed around the development axis A.

In the embodiment in Figures 1-1b, each wall of the pair of walls 12 has a through opening defining a slot-like seat 14 in which it engages the enlarged portion 11c of the connecting element 11. In this way, the enlarged portion 11c of the connecting element 11 discharges an axial force applied to the pair of walls 12 directly onto the connecting element 11, remaining free in its rotation about the development axis A and at the same time constrained in the direction of that axis A.

In the embodiment illustrated, the constraining elements 13 of the walls are pins 13a engaging corresponding holes 12b made in the walls 12, whereby a sleeve 13b is fitted to each pin 13a in a position interposed between the pair of walls 12 to act as a spacer.

In particular, in the embodiment of Figures 1-1b, a pair of pins 13a is provided which engages the walls 12 near the position where the second portion 11b of the connecting element 11 is located, when the enlarged portion 11c engages the seat 14. Specifically, the two pins of pair of pins 13a are placed in such a way that the second portion 11b of the connecting element 11 is interposed between them. In other words, the holes 12b are made in the vicinity of the seat 14 and essentially at the height of its side ends. In this way, the enlarged portion 11c of the connecting element 11 can rest against the two pins 13a, discharging thereon, and thus on the pair of walls 12, an axial force applied on the connecting element 11. Specifically, the connecting element 11 rests advantageously against the two sleeves 13b fitted on the pins 13a, remaining free in its rotation about the development axis A and at the same time constrained in the direction of that axis A.

The pins 13a may be made as screws, rivets, studs or any other cylindrical element configured to constrain the walls 12 and retain the enlarged portion 11c of the connecting element 11.

In an alternative embodiment (not shown), the pins are made as one piece with the sleeve, constituting a single piece having two end sections having a diameter useful for engagement in the holes 12b of the walls 12 and an intermediate section having a diameter useful for retaining the intermediate portion 11c of the connecting element 11, wherein the intermediate section has an extension suitable for defining the mutually spaced position of the walls 12.

The walls 12 have an elongated shape in the direction of the development axis A, in a direction opposite to that along which the first eyelet-shaped portion 11a extends. Thus, a second compartment 16 is also created between the walls 12 adjacent to the first compartment 12a in which the enlarged portion 11c of the connecting element 11 is housed. The second compartment 16 houses a shaft 17 around which a looped end of a rope 20 can be constrained.

In the embodiment shown, the shaft 17 is removably mounted in the second compartment 16. In particular, at one end of the shaft 17, it has a perimeter groove 17a in which a fixing plate 18 is engaged to retain the shaft 17 in position. The fixing plate 18 is in turn connected to a first wall 12 of the pair of walls by removable constraint means 19, such as screws. The shaft 17 also preferably has a mushroom head 17b that engages a second wall of the pair of walls 12.

The fixing plate 18 has an opening 18a for the insertion of the shaft 17 shaped in such a way as to require a sequence of at least two operations between insertion, rotation about its own axis and sliding of the shaft 17 in the opening 18a before reaching the engagement position between the opening 18a and the perimeter groove 17a. In the embodiment illustrated, the opening 18a comprises an inverted section portion of the shaft 17 from which a slot portion departs, requiring the shaft 17 to be inverted by rotating it about its own axis once it has been inserted into the inverted section portion and then translating it along the slot portion. This prevents the shaft from accidentally slipping off the fixing plate 18.

In alternative embodiments, the shaft 17 is permanently mounted in the second compartment 16.

Advantageously, the first compartment 12a and the second compartment 16 are also delimited laterally by an insert 21, which defines with the walls 12 at least one laterally closed compartment over substantially an entire lateral perimeter around the development axis A. In the embodiment in Figures 1-1b the insert 21 is made in two parts. The insert 21 comprises an upper portion 21a preferably also delimiting at the top the first compartment 12a and delineating a pair of housings 15 configured to accommodate a first end of the sleeves 13b.

From the upper portion 21a, a pair of wing-like side walls 21b branch off, laterally delimiting the second compartment 16, laterally closing, with the walls 12, the second compartment 16 on substantially an entire lateral perimeter around the development axis A and thereby limiting the freedom of movement of the entire end device 10 around the looped end of the rope 20 when it is constrained around the shaft 17. This allows the end of the rope 20 and the swivel end device 10 to be manoeuvred in a stable manner, with the first eyelet-shaped portion 11a protruding from the first compartment 12a remaining substantially aligned with the loop defined by the end of the rope 20.

The insert 21 is preferably made of plastic. More preferably, the insert 21 is made of a type of low friction plastic, e.g. having a coefficient of friction less than 0.50, preferably less than 0.40, more preferably less than 0.35. By way of example, suitable plastic materials for the insert 21 are PA, POM, PTFE and so on. In this way, the connecting element 11 housed in the insert 21 is free to rotate in a precise, controlled and low-friction manner, while being firmly constrained and retained in the first compartment 12a.

With the walls 12 assembled to each other in a spaced apart position through the pins 13a and the connecting element 11 housed in the first compartment 12a that is created between the two walls 12, the enlarged portion 11c of the connecting element 11 engages both the seat 14 and the pins 13a, thereby directly and indirectly discharging on the pair of walls 12 an axial force applied on the eyelet-shaped portion 11a of the connecting element 11. At the same time, the enlarged portion 11c of the connecting element 11 is free to rotate about the development axis A.

The manufacture and assembly of the parts of the swivel end device 10 according to the invention are particularly simple and easy. The walls 12 are, in fact, obtainable by simple cutting operations, e.g. by laser cutting, the insert 21 can be obtained by moulding, while the connecting element 11 can be made by appropriate machining from solid by lathe-milling. The three elements are easily assembled and constrained together with the aid of pins 13a and sleeves 13b.

Finally, in the case of a removable shaft, the shaft 17 can be easily removed to accommodate the looped end of a rope 20 and then reliably locked back into position via the fixing plate 18 and the related removable constraint means. In this way, the swivel end device 10 according to the invention is quickly mountable on the looped end of the rope 20 providing a secure constraint and offering a swivel connection point substantially maintained in line with the loop defined by the end of the rope 20.

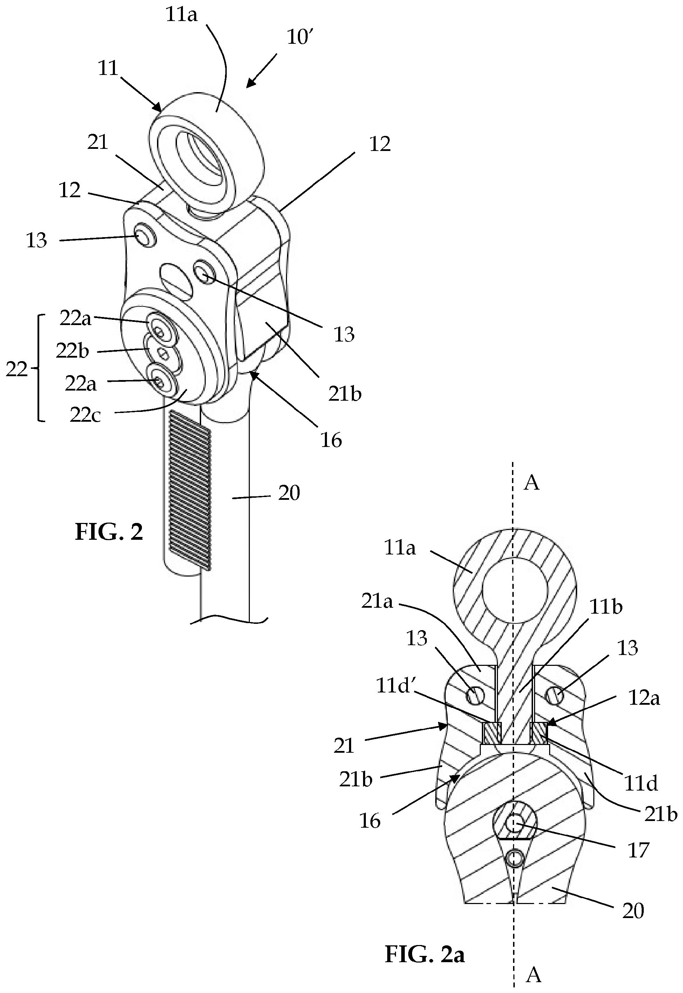

With reference to Figures 2 and 2a, a second preferred embodiment of a swivel end device 10' according to the present invention is shown.

The following description will focus in particular on the different characteristics with respect to the embodiment of Figures 1-1b. For any details not described, the description relating to the first embodiment therefore applies.

The swivel end device 10' in Figures 2 and 2a comprises a connecting element 11 which in turn comprises a first eyelet-shaped portion 11a, from which a second elongated portion 11b shaped like a stem extends along a development axis A.

At a free end of the second portion 11b, this second portion 11b is fixedly constrained to a disc element 11d, such as a washer screwed and then riveted onto the second elongated stem portion 11b. The disc element 11d has at least one surface 11d' developing transversely, i.e. not parallel, with respect to the development axis A.

The connecting element 11 is rotatably accommodated around the development axis A between a pair of walls 12 not orthogonal to the development axis A of the second elongated stem portion 11b, preferably a pair of walls having two development directions, one of which is parallel to the axis A, and constrained to each other according to a facing arrangement, preferably parallel, and spaced such that a first 12a and a second 16 housing compartment are defined.

In particular, the connecting element 11 is accommodated in the first compartment 12a, while the second compartment 16 houses a shaft 17 around which a looped end of a rope 20 can be constrained.

Advantageously, also in the second embodiment, the first 12a and second compartment 16 defined between the two walls 12 not orthogonal to the development axis A are delimited laterally and above by an insert 21 which defines with the walls 12 at least one laterally closed compartment over substantially an entire lateral perimeter around the development axis A.

In the embodiment in Figures 2 and 2a, the insert 21 is made in one piece and comprises a solid upper portion 21a in which a pair of holes is provided for the passage of the constraining elements 13 between the two walls 12. The solid upper portion 21a delimits the first compartment 12a. In particular, the insert 21 engages the surface 11d' of the disc element 11d to retain such an element in contrast to a tensile axial force along the development axis A. From solid the upper portion 21a, two wing-like side walls 21b branch off, laterally delimiting, with the walls 12, the second compartment 16 on substantially an entire lateral perimeter around the development axis A. The wings 21b are configured to limit the freedom of movement of the entire end device 10 around the looped end of the rope 20 when it is constrained around the shaft 17.

In the embodiment of Figures 2 and 2a, the shaft 17 is fixed to a wall of the pair of walls 12 through at least one safety element 22. The safety element 22 comprises, for example, a pair of screws 22a that tighten a primary screw 22b that constrains, by means of a washer 22c, the in-situ position of the shaft 17 against a first wall of the pair of walls 12. The shaft 17 also preferably has a mushroom head (not shown) that engages a second wall of the pair of walls 12.

In this embodiment, it is permissible for the insert 21 to be made of metal, for example anodised aluminium, so as to mediate the load of the disc 11d, when the device is stressed, towards the pins 13a.

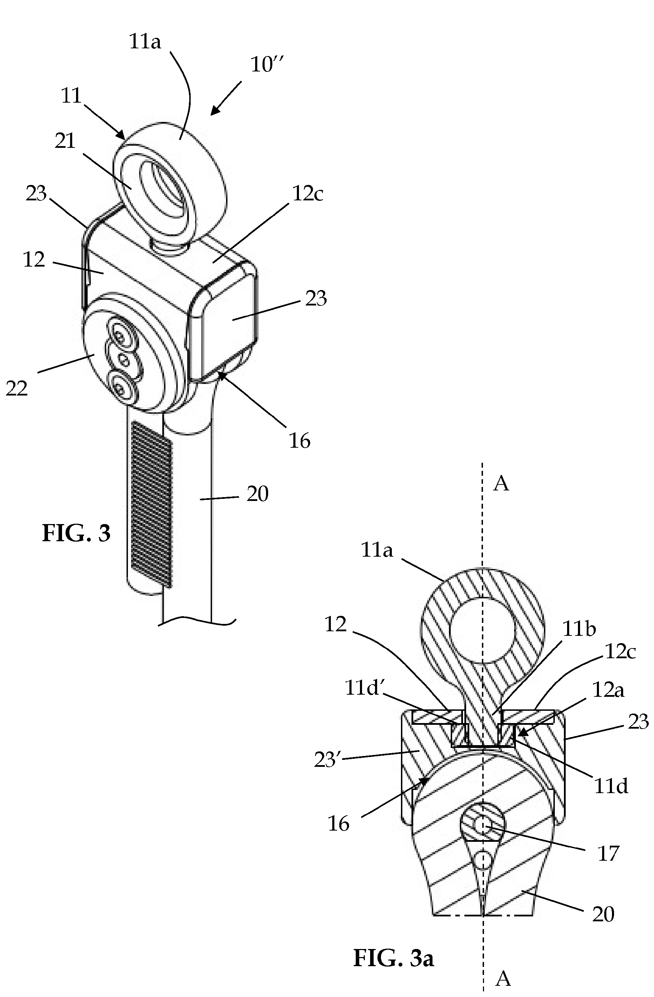

With reference to Figures 3 and 3a, a third preferred embodiment of a swivel end device 10" according to the present invention is shown.

The following description will focus in particular on the different characteristics with respect to the embodiment of Figures 2 and 2a. For any details not described, the parts of the description relating to the first or second embodiment therefore apply.

The swivel end device 10" in Figures 3 and 3a comprises a connecting element 11 in which a disc element 11d is provided, such as a washer screwed onto the second elongated stem portion 11b extending from the first eyelet-shaped portion 11a. The disc element 11d has at least one surface 11d' developing transversely, i.e. not parallel, with respect to the development axis A which engages an intermediate portion 12c of a saddle plate in such a way as to discharge on the plate an axial force applied on the eyelet-shaped portion 11a of the connecting element 11.

The saddle plate implements the pair of walls 12 not orthogonal to the development axis A, constrained to each other according to a facing arrangement, e.g. substantially parallel, and spaced such that a first compartment 12a and a second housing compartment 16 are defined between them.

In the specific embodiment of the third embodiment, the walls of the pair of walls 12 are constrained to each other through the intermediate portion 12c, preferably substantially orthogonal to the development axis A, which acts as a connection between the two walls 12.

The second compartment 16 houses a shaft 17 around which a looped end of a rope 20 can be constrained. Like the second embodiment, the shaft 17 is fixed to a wall of the pair of walls 12 through at least one safety element 22.

In the third embodiment, the first compartment 12a and the second compartment 16 defined between the walls of the wall pair 12 are delimited laterally by a pair of side walls 23, which can be inserted at the side ends of the saddle plate in such a way as to define a compartment peripherally closed around the development axis A.

The side walls 23 are configured to restrict the freedom of movement of the entire end device 10 around the looped end of the rope 20 when it is constrained around the shaft 17.

In the embodiment shown in Figures 3 and 3a, the side walls 23 are two walls of a solid element 23' that partially fills the space subtended by the saddle plate, thus defining a second compartment 16 cut out of the volume required for the passage of the looped end of the rope 20. Thus, the freedom of movement of the entire end device 10 around the looped end of the rope 20 is appropriately even more restricted.

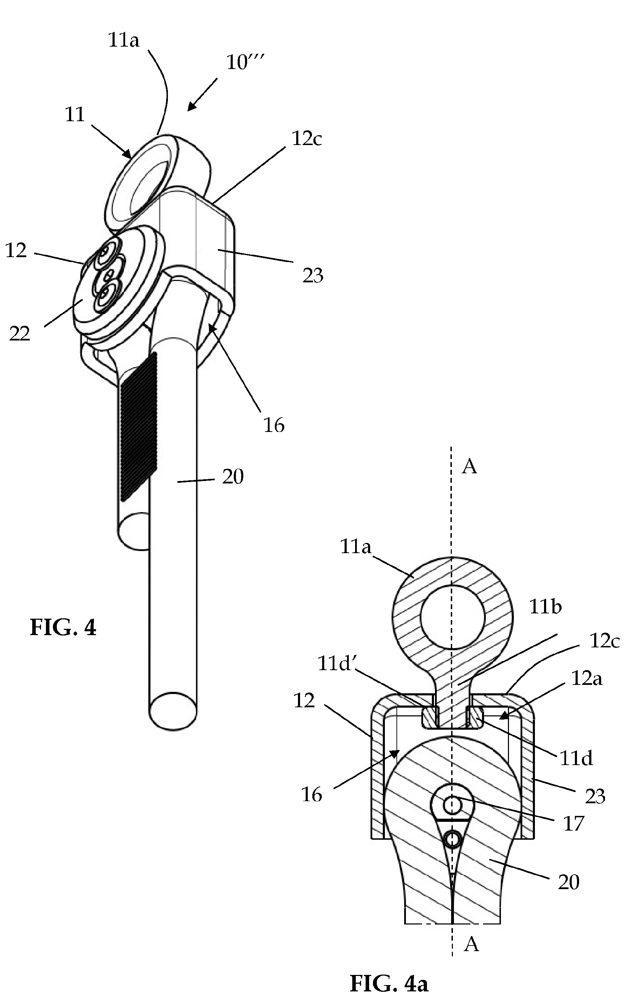

With reference to Figures 4 and 4a, a fourth preferred embodiment of a swivel end device 10"' according to the present invention is shown.

The following description will focus in particular on the different characteristics with respect to the embodiment of Figures 3 and 3a. For any details not described, the parts of the description relating to the previous embodiments apply.

The swivel end device 1‴ in Figures 4 and 4a comprises a connecting element 11 in which a disc element 11d is provided, such as a washer screwed onto the second elongated stem portion 11b extending from the first eyelet-shaped portion 11a. The disc element 11d has at least one surface 11d' developing transversely, i.e. not parallel, with respect to the development axis A which engages an upper face 12c of a casing substantially shaped like a parallelepiped open at a lower face so as to discharge on the casing an axial force applied on the eyelet-shaped portion 11a of the connecting element 11.

The substantially parallelepiped shaped casing implements the pair of walls 12 not orthogonal to the development axis A, constrained to each other according to a facing and/or substantially parallel and spaced apart arrangement such as to define between them a first compartment 12a in which the disc element 11d of the connecting element 11 is housed, and a second compartment 16 in which a shaft 17 around which a looped end of a rope 20 can be constrained is removably housed. The substantially parallelepiped shaped casing also implements a pair of side walls 23 extending between the pair of walls 12 not orthogonal to the development axis A at the side ends thereof, connecting them. In this way, the first 12a and the second compartment 16 defined between the walls of the pair of walls 12 are also delimited laterally in such a way as to define a peripherally closed compartment around the development axis A.

This restricts the freedom of movement of the entire end device 10 around the looped end of the rope 20 when it is constrained around the shaft 17.

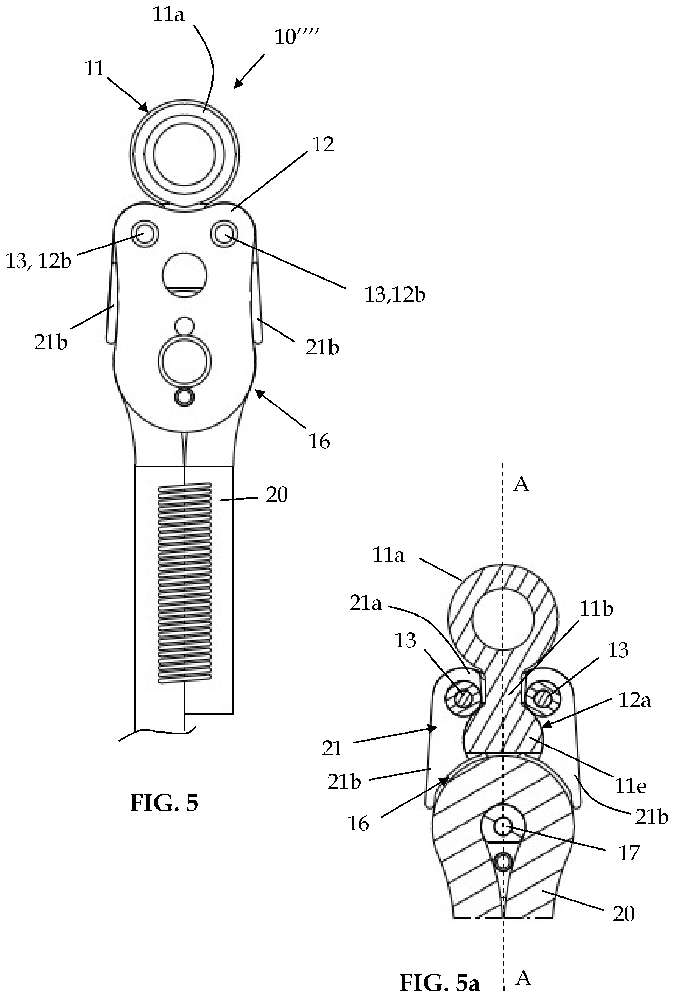

With reference to Figures 5 and 5a, a fifth preferred embodiment of a swivel end device 10ʺʺ according to the present invention is shown.

The following description will focus in particular on the different characteristics with respect to the embodiment of Figures 2 and 2a. For any details not described, the parts of the description relating to the first or second embodiment apply.

The swivel end device 10ʺʺ in Figures 5 and 5a comprises a connecting element 11 which in turn comprises a first eyelet-shaped portion 11a, from which a second elongated portion 11b shaped like a stem extends along a development axis A.

At a free end of the second portion 11b, this second portion 11b comprises an enlarged portion 11e with a substantially spherical or sphere-like shape.

The connecting element 11 is accommodated in a rotatable manner around the development axis A between a pair of walls 12 not orthogonal to the development axis A and constrained to each other according to a facing arrangement, e.g. substantially parallel, and spaced such that a first 12a and a second housing compartment 16 are defined.

In particular, the connecting element 11 is accommodated in the first compartment 12a, while the second compartment 16 houses a shaft 17 around which a looped end of a rope 20 can be constrained.

Advantageously, also in the fifth embodiment, the first 12a and the second compartment 16 defined between the two walls 12 are delimited laterally and at the top by an insert 21 in such a way as to define at least one compartment peripherally closed around the development axis A.

In the embodiment in Figures 5 and 5a, the insert 21 comprises a solid upper portion 21a in which a pair of holes is provided for the passage of the constraining elements 13 between the two walls 12. The solid upper portion 21a delimits the first compartment 12a substantially spherical or shaped like a portion of sphere. In particular, the insert 21 engages the enlarged portion 11e to retain the connecting element 11 in contrast to a tensile axial force along the development axis A. From the solid upper portion 21a, two wing-like side walls 21b branch off, laterally delimiting the second compartment 16 so as to define a compartment peripherally closed around the development axis A. The wings 21b are configured to limit the freedom of movement of the entire end device 10 around the looped end of the rope 20 when it is constrained around the shaft 17.

## Claims

1. Swivel end device (10) for connection to a looped rope end comprising at least one connecting element (11), which comprises a first eyelet-shaped portion (11a), and a pair of walls (12) not orthogonal to a development axis (A) and constrained to each other according to a facing and spaced apart arrangement so as to define a first housing compartment (12a) and a second housing compartment (16), side by side along the development axis (A), wherein the at least one connecting element (11) is housed in the first housing compartment (12a) in a rotatable manner around a development axis (A) and with the first eyelet-shaped portion (11a) protruding externally from the first housing compartment (12a), and wherein the second housing compartment (16) houses a shaft (17) around which a looped rope end (20) can be constrained, **characterised in that** it comprises a pair of side walls (21b,23) which extend between the pair of facing walls (12) at the lateral ends of the same (12) and laterally delimit at least the second housing compartment (16) in such a way as to define with the pair of facing walls (12) at least one compartment peripherally closed around the development axis (A).

2. Swivel end device (10) according to claim 1, wherein between the pair of walls (12) there is an insert (21) which internally delimits the first (12a) and the second (16) housing compartment, the insert comprising an upper portion (21a) from which a pair of fins (21b) departs, the pair of fins (21b) implementing the pair of side walls which laterally delimit at least the second housing compartment (16).

3. Swivel end device (10) according to claim 2, wherein the insert (21) is made of a plastic material.

4. Swivel end device (10) according to claim 2 or 3, wherein the insert (21) is made of a low friction plastic material, such as a plastic material with a friction coefficient of less than 0.50, a plastic material with a friction coefficient of less than 0.40 or a plastic material with a friction coefficient of less than 0.35.

5. Swivel end device (10) according to any one of the preceding claims, wherein the walls of the pair of walls (12) are constrained to each other by a pair of elongated constraint members (13) configured to maintain the walls of the pair of walls (12) spaced apart and substantially parallel to each other.

6. Swivel end device (10) according to claim 5, wherein the constraint elements (13) are pins (13a) that engage corresponding holes (12b) made on the walls of the pair of walls (12), wherein each pin (13a) comprises a portion with an enlarged diameter (13b) positioned between the pair of walls (12) so as to act as a spacer.

7. Swivel end device (10) according to claim 5 or 6, wherein the upper portion (21a) of the insert (21) delineates a pair of housings (15) for the passage of the constraint elements (13).

8. Swivel end device (10) according to claim 1, wherein the first housing compartment (12a) and the second housing compartment (16) are delimited laterally by the pair of side walls (23), wherein the side walls (23) are made of one piece with the pair of walls (12) or can be inserted between the pair of walls (12) at the lateral ends of the same (12) in such a way as to define the at least one compartment peripherally closed around the development axis (A).

9. Swivel connecting device (10) according to any one of the preceding claims, wherein the shaft (17) arranged in the second housing compartment (16) is of the removable type.

10. Swivel connecting device (10) according to claim 9, wherein the shaft (17) has a perimeter groove (17a) at one end thereof, the perimeter groove (17a) engaging a fixing plate (18) to retain the shaft (17) in position.

11. Swivel connecting device (10) according to claim 10, wherein the fixing plate (18) comprises an opening (18a) in which it engages the perimeter groove (17a), wherein the engagement opening is shaped so as to require a sequence of at least two operations between insertion of the shaft (17) into the opening (18a), rotation about an axis of the shaft (17) and sliding of the shaft (17) in the opening (18a) before reaching an engagement position between the opening (18a) and the perimeter groove (17a).

12. Swivel connecting device (10) according to claim 11, wherein the opening (18a) comprises a portion shaped like a section of the shaft (17) from which a slot portion departs.

13. Swivel end device (10) according to any one of the preceding claims, wherein a second portion (11b) shaped like a stem elongated along the development axis (A) extends from the first eyelet-shaped portion (11a) of the at least one connecting element (11) and between the walls (12), wherein at a free end of the second portion (11b), the connecting element (11) comprises a third enlarged portion (11c,11d,11e) housed in the first housing compartment (12a).

14. Swivel end device (10) according to claim 13, wherein the third enlarged portion (11c) comprises at least one surface (11c') developing transversely to the development axis (A), and wherein each wall of the pair of walls (12) comprises a through opening defining a seat (14) in which it engages the at least one transverse surface (11c') of the enlarged portion (11c) of the connecting element (11) in a manner free to rotate about the development axis (A).
